# EUROPÄISCHE PATENTANMELDUNG

(11) **EP 1 038 624 A2**
(43) Veröffentlichungstag der Anmeldung: **27.09.2000**
(21) Anmeldenummer: 00105698.5
(22) Anmeldetag: 17.03.2000
(51) Int. Cl.: B23D 49/16

(54) **Säge mit hin- und hergehendem und winkeleinstellbarem Sägeblatt**

(30) Priorität: 19.03.1999 DE 29905088 U
(71) Anmelder: Kress-elektrik GmbH + Co. Elektromotorenfabrik, D-72406 Bisingen (DE)
(72) Erfinder: Kress,Willy, 72406 Bisingen (DE)
(74) Vertreter: Otte, Peter, Dipl.-Ing.

(57) **Zusammenfassung**

Eine Säge, umfassend einen Motor und einen von diesem antreibbare Antriebseinrichtung, durch welche ein Sägeblatt (3) in eine oszillierende Hubbewegung versetzbar ist, ist dadurch gekennzeichnet, daß das Sägeblatt (3) drehbar an der Antriebseinrichtung gelagert und in einer gedrehten Position arretierbar ist.

## Beschreibung

Die Erfindung betrifft eine Säge nach dem Oberbegriff des Anspruchs 1.

Solche Sägen sind seit längerem, beispielsweise als sogenannte Säbelsägen, bekannt, bei denen das Sägeblatt säbelartig an einem Gehäuseteil angeordnet ist, der im wesentlichen senkrecht zu einem einen Antriebsmotor und ein Getriebe aufnehmenden und einen Haltegriff umfassenden Gehäuseteil verläuft.

Aufgrund dieser Ausbildung des Gehäuses können sich z.B. beim Sägen über Kopf ungünstige Arbeitssituationen, beispielsweise durch einen nicht ausgewogenen Schwerpunkt der gesamten Säge, ergeben. Darüber hinaus ist das Sägen an schwer zugänglichen Stellen in vielen Fällen aufgrund dieser Anordnung des Gehäuses überhaupt nicht möglich.

Aufgabe der Erfindung ist es daher, eine Säge, insbesondere eine Säbelsäge der gattungsgemäßen Art derart weiterzubilden, daß sie auch in schwer zugänglichen Positionen eine ergonomisch günstige Arbeitshaltung der Bedienperson ermöglicht.

Diese Aufgabe wird durch eine Säge der eingangs beschriebenen Art erfindungsgemäß durch die Merkmale des Anspruchs 1 gelöst und hat den Vorteil, daß durch die Drehbarkeit des Sägeblatts eine Anpassung auf eine ergonomisch günstige Arbeitshaltung leicht möglich ist und daß die Säge insbesondere auch in sehr schwer zugänglichen Arbeitspositionen einsetzbar ist.

Weitere vorteilhafte Ausführungsformen der Erfindung sind Gegenstand der Unteransprüche. So ist beispielsweise bei einer vorteilhaften Ausführungsform vorgesehen, daß ein drehbar gelagerter Sägeschuh vorgesehen ist, der zusammen mit dem Sägeblatt verdrehbar ist.

Der Antrieb des Sägeblatts geschieht vorzugsweise über einen drehbar gelagerten Stößel. Dieser Stößel umfaßt vorzugsweise wenigstens zwei drehbar aneinander gelagerte Teile, dessen eines an einem von dem Motor antreibbaren Pleuel angeordnet ist, und dessen anderes eine Sägeblattaufnahme bildet, wobei zwischen den beiden Teilen ein elastisches Ausgleichselement angeordnet ist. Auf diese Weise kann das Sägeblatt in beliebige Richtungen gedreht werden.

Die beiden Teile können beispielsweise durch eine konzentrisch zur Drehachse angeordnete Schraubverbindung aneinander befestigbar sein.

Bei einer besonders vorteilhaften Ausführungsform ist vorgesehen, dass das eine, an dem von dem Motor antreibbaren Pleuel angeordnete Teil an dem anderen, die Sägeblattaufnahme bildenden Teil mittels eines Verbindungselements befestigt ist, das in einer zwischen den beiden Teilen sowohl an dem einen Teil als auch an dem anderen Teil angeordneten und auf die Gestalt des Verbindungselements angepassten Ausnehmung angeordnet ist. Hierdruch muss das die Sägeblattaufnahme bildende Teil nicht hohlzylindrisch ausgebildet sein, um die Befestigungsschraube aufzunehmen. Dies erleichtert nicht nur die Montage, es kann insbesondere auch ein weiteres, an dem hohlzylindrischen Teil zu befestigendes, das Sägeblatt aufnehmendes Teil entfallen, da das die Sägeblattaufnahme bildende Teil an seinem dem Sägeblatt zugewandten Ende schon so ausgebildet werden kann, dass ein Sägeblatt leicht befestigbar ist, was bei einem hohlzylindrischen Teil nicht möglich ist, da das Sägeblatt im wesentlichen mittig angeordnet ist. Bei dieser Ausführungsform kann der Stößel daher aus lediglich zwei Teilen bestehen, wohingegen er bei der Schraubverbindung mindestens drei Teile umfasst.

Das Verbindungselement kann beispielsweise ein Draht sein, der in einer auf den Draht angepassten Ausnehmung oder Nut angeordnet ist und durch eine tangential zur Ausnehmung hin durchgängigen Öffnung in die Ausnehmung einführbar ist.

Zur Drehung des Sägeblatts ist vorzugsweise vorgesehen, daß im wesentlich koaxial zur Längsachse des Sägeblatts eine gegen die Rückstellkraft eines Rückstellelements axial verschiebliche, in vorgebbaren Drehpositionen arretierbare Rasteinrichtung vorgesehen ist, mittels derer das Sägeblatt drehbar und in einer gedrehten Position arretierbar ist. Diese Rasteinrichtung kann rein prinzipiell auf die unterschiedlichste Art und Weise ausgeführt werden. Eine vorteilhafte Ausführungsform sieht vor, daß die Rasteinrichtung umfaßt:
- eine Bundbuchse, durch die der Stößel geführt ist;
- ein auf der Bundbuchse angeordnetes erstes Rast-
- element;
- ein an einem Gehäuse der Säge angeordnetes zweites Rastelement;
- und ein gegen die Rückstellkraft des Rückstellelements in Richtung der Längsachse des Sägeblatts axial verschiebliches Betätigungselement, durch welches der Stößel zusammen mit dem mit ihm drehfest verbundenen ersten Rastelement drehbar ist und welches sowohl auf das erste als auch auf das zweite Rastelement angepaßte weitere Rastelemente aufweist und in seiner von dem Rückstellelement vorgespannten Ausgangslage eine gedrehte und arretierte Position des Sägeblatts definiert.

Eine vorteilhafte Ausführungsform sieht dabei vor, daß das erste und zweite Rastelement Indexierscheiben und die an dem Betätigungselement angeordneten weiteren Rastelemente Indexierstege sind, die auf die Indexierscheiben angepaßt sind.

Das Betätigungselement ist vorzugsweise ein manuell betätigbarer Drehgriff, der gegen die Rückstellkraft einer Feder verschieblich ist. Auf diese Weise ist eine Verdrehung des Sägeblatts besonders einfach handhabbar.

Um Verletzungen zu vermeiden, ist bei einer vorteilhaften Ausführungsform vorgesehen, daß das Sägeblatt wenigstens teilweise von einem Schutzkäfig umgeben ist, der vorzugsweise an dem ersten Rastelement befestigt ist, so daß er sich zusammen mit dem Sägeblatt drehen läßt. Aus diesem Grunde ist auch der Sägeschuh vorteilhafterweise an dem Schutzkäfig angeordnet.

An dem Schutzkäfig ist vorzugsweise ein Sägeschuh schwenkbar und im wesentlichen parallel zur Hubrichtung des Sägeblatts verschiebbar angeordnet. Diese Sägeschuh dient einerseits zur Anpassung an verschiedene Sägesituationen, zum anderen ermöglicht er eine präzise Führung des Sägblatts.

Weitere Vorteile und Merkmale der Erfindung sind Gegenstand der nachfolgenden Beschreibung sowie der zeichnerischen Darstellung eines Ausführungsbeispiels.

In der Zeichnung zeigen:
- Fig. 1: eine teilweise weggebrochene Schnittdarstellung des vorderen Teils einer von der Erfindung Gebrauch machenden Säbelsäge;
- Fig. 2: eine teilweise weggebrochene Schnittdarstellung der in Fig. 1 dargestellten Rasteinrichtung der Säbelsäge in ihrer entrasteten Position;
- Fig. 3: eine Schnittdarstellung entlang der Linie A-B in Fig. 2;
- Fig. 4: eine teilweise weggebrochene Schnittdarstellung des vorderen Teils der in Fig. 1 bis 3 dargestellten Säbelsäge zur Erläuterung der Verschwenkmöglichkeit des Sägetisches;
- Fig. 5a, b, c, d: Unteransichten des zusammen mit dem Sägeschuh verschwenkten und arretierten Sägeblatts in verschiedenen Drehpositionen und
- Fig. 6: ein Ausführungsbeispiel einer Befestigung von zwei, den Stößel bildenden Teilen aneinander.

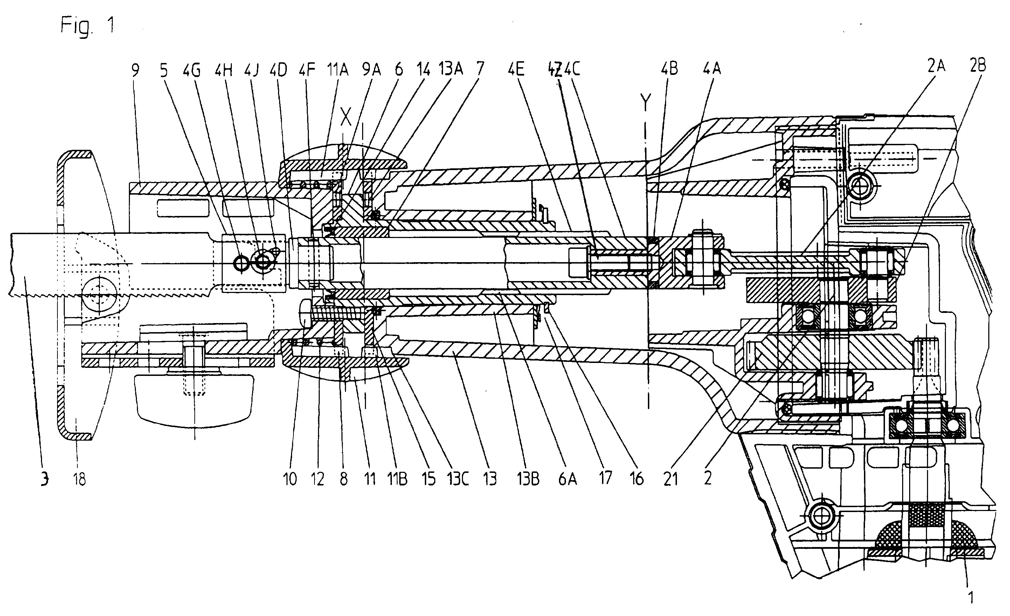

Wie in Fig. 1 dargestellt ist, erfolgt der Antrieb der Säbelsäge über einen beispielsweise durch das Netz oder einen oder mehrere Akkus gespeisten Elektromotor 1, dessen rotatorische Bewegung mit Hilfe eines Geradschubkurbelgetriebes 2 in eine translatorische Hubbewegung umgewandelt wird.

Die Schnittstelle zwischen einem Pleuel 2A des Kurbelgetriebes 2 und eines linear bewegten Sägeblatts 3 ist ein mehrteiliger Stößel 4A bis 4J umfassend folgende Teile:

Ein Teil 4A stellt ein Verbindungsstück zwischen dem Stößel und dem Pleuel 2A dar. Ein linkes Gabelstück des Verbindungsstücks 4A ist durch einen Bolzen 5 mit der Pleuelstange verbunden. Ein rechts dargestellter Bund ist drehbar in einem Teil 4C des Stößels gelagert. Mit dem Bezugszeichen 4B ist ein Dichtring, z.B. ein Vulkollanring zwischen dem Verbindungsstück 4A und dem Hauptteil 4C des Stößels bezeichnet. Der Vulkollanring 4B dient als Ausgleichselement zur Kompensation der Toleranzen zwischen dem Verbindungsstück 4A und dem Hauptteil 4C des Stößels und dient gleichzeitig als Gleitscheibe zur Reduzierung des Reibmoments bei einer Drehung des Sägeblatts 3 durch einen Bediener der Säbelsäge.

Wie in Fig. 1 ferner dargestellt ist, wird das Verbindungsstück 4A zusammen mit dem Vulkollanring 4B durch eine konzentrisch zur Drehachse angeordnete Zylinderschraube 4Z axial an dem Hauptteil 4C des Stößels verschraubt. Die Verschraubung erfolgt dabei so, daß eine Rotationsbewegung zwischen dem Verbindungsstück 4A und dem Hauptteil 4C möglich ist, so daß diese Anordnung eine Drehschnittstelle Y definiert.

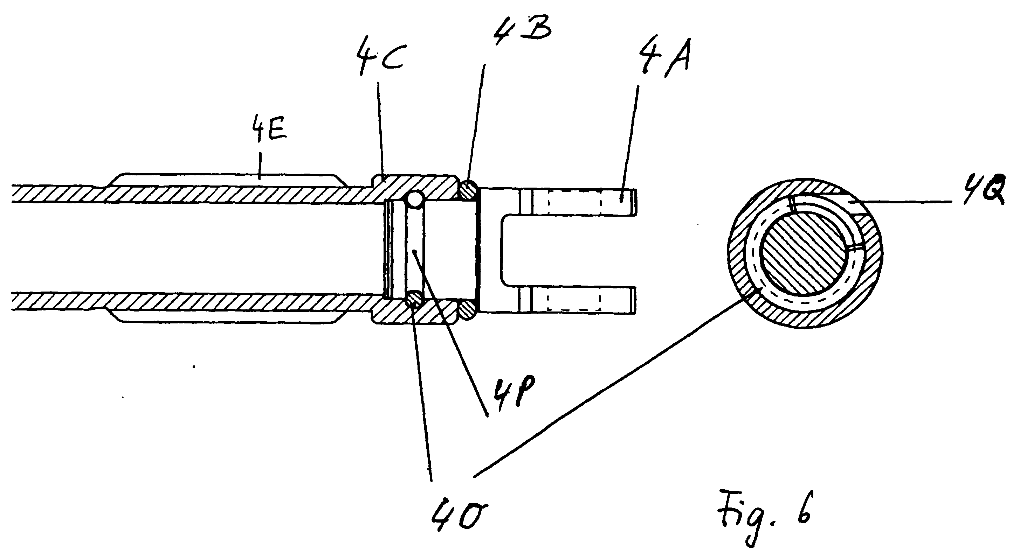

Ein weiteres Ausführungsbeispiel zur Befestigung des Verbindungsstücks 4A an dem Hauptteil 4C ist in Fig. 6 schematisch dargestellt.

Diese Befestigungsweise erleichtert nicht nur die Montage, sie erübrigt darüber hinaus auch die Befestigung des Sägeblatts 3 direkt an dem Hauptteil 4C ohne ein weiteres Teil (Endstück 4D), das durch beispielsweise einen Zylinderstift 4F an dem Hauptteil 4C befestigt werden muss.

Anstatt der Befestigung mittels einer Schraube, wie in Fig. 1 dargestellt, ist es auch möglich, das Verbindungsstück 4A durch einen Draht 4O an dem Hauptteil 4C zu befestigen, der in einer Ausnehmung oder Nut 4P angeordnet ist, die sowohl in dem Verbindungsstück 4A als auch in dem Hauptteil etwa zu gleichen Teilen angeordnet ist. Um den Draht 4O in die Ausnehmung 4P einführen zu können, ist in dem Hauptteil 4C eine zu der Ausnehmung 4P hin durchgängige, im wesentlichen in Tangentialrichtung angeordnete Öffnung 4Q vorgesehen, durch die der Draht 4O problemlos eingeführt werden kann.

Diese Befestigungsweise erleichtert nicht nur die Montage, sie erübrigt darüber hinaus auch die Befestigung des Sägeblatts 3 direkt an dem Hauptteil 4C ohne ein weiteres Teil (Endstück 4D), das durch beispielsweise einen Zylinderstift 4F an dem Hauptteil 4C befestigt werden muss.

Im Außenbereich des Stößels ist ein Vielkeil-Außenprofil 4E angeordnet. Ein Endstück 4D des Stößels wird nach der Montage des Verbindungsstücks 4A und des Vulkollanrings 4B in das Hauptteil 4C des Stößels eingepreßt und mit einem Zylinderstift 4F axial gesichert.

Das Endstück 4D dient zur Aufnahme des eigentlichen Sägeblatts 3 und ist mit zwei Zylinderstiften und einer Gewindebohrung versehen. Ein Zylinderstift 4G dient als Fangstift für ein dafür vorgesehenes Fangloch im Sägeblatt 3. Die Gewindebohrung nimmt eine Zylinderschraube auf, die mit Hilfe eines U-förmigen Spannblechs 5 das Sägeblatt 3 fest an das Endstück 4D andrückt. Ein kleinerer Zylinderstift 4J erfüllt zwei Aufgaben, er dient zum einen als Führungsstift im Falle eines Sägeblattwechsels. Durch die abgebogenen Schenkel des Spannblechs 5 und eben diesem Zylinderstift 4J wird das Spannblech 5 definert nach außen geschoben. Außerdem dient dieser Zylinderstift 4J dazu, zu verhindern, daß das Sägeblatt 3 nicht um 180° verdreht eingesetzt werden kann.

Die oben beschriebenen Teile 4A bis 4J ergeben den über die Schubkurbel angetriebenen linear bewegten Stößel, der durch eine Bundbuchse 6 und eine eingepreßte Lagerbuchse 7 axial geführt ist.

Mittels der nachfolgend erläuterten Rasteinrichtung ist es möglich, den Stößel und die Sägeblattaufnahme schnell und einfach in jede gewünschte Position zu verdrehen und in dieser zu arretieren.

Die Rasteinrichtung umfaßt die Bundbuchse 6, auf der ein Rastelement in Form eines scheibenförmigen Blechs (Blechscheibe) 8 mit Indexiernuten montiert ist. Die Blechscheibe 8 mit den Indexiernuten wird durch einen weiter unten näher zu erläuternden Schutzkäfig 9 mit Hilfe von Selbstformschrauben 10 fixiert. Zur Erleichterung dieser Montage ist an dem Schutzkäfig 9 ein Codierzapfen 9a angeordnet, der eine definierte Lage zwischen dem Schutzkäfig und der Blechscheibe 8 erzwingt.

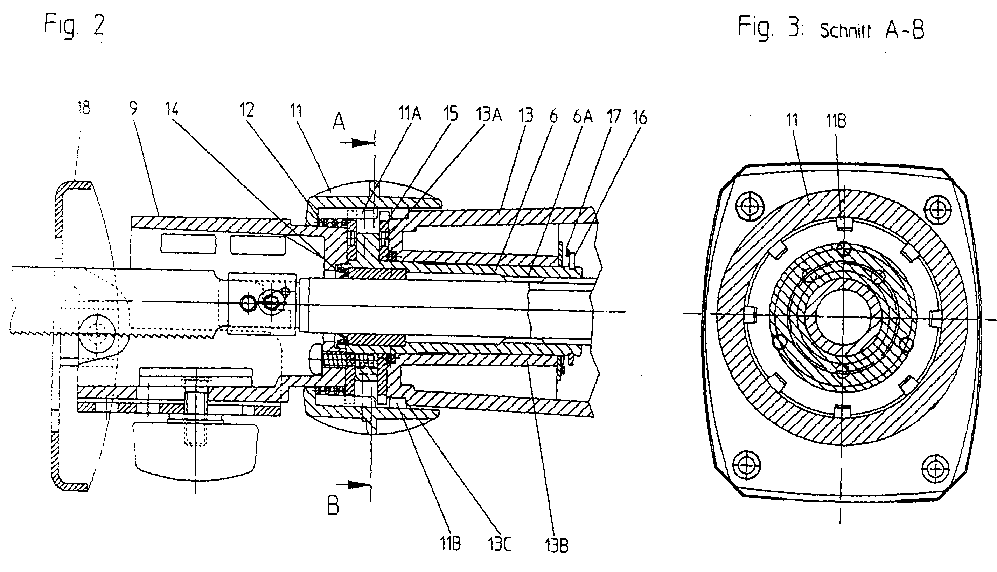

Zwischen dem Käfig 9 und der Blechscheibe 8 ist ein Drehgriff 11 mit einer Druckfeder 12 montiert. Die Indexiernuten der Blechscheibe 8 und im Innenbereich des Drehgriffs 11 angeordnete Indexierstege 11a ermöglichen es, daß der Griff von einer Bedienperson axial in Richtung eines Getriebegehäuses 13 gezogen werden kann (siehe Fig. 2 und Fig. 3). Eine Drehbewegung des Drehgriffs 11 wird durch die Fixierung der Blechscheibe 8 auf die Bundbuchse 6 übertragen. Aufgrund eines im Innenbereich der Bundbuchse 6 partiell angeordneten Innenvielkeilprofils 6A wird diese Drehbewegung auf den Stößel übertragen. Hieraus resultiert eine Drehung des Sägeblatts 3, da dieses - wie oben erläutert - direkt am Endstück des Stößels fixiert ist. Das Innere des Getriebegehäuses 13 wird durch eine Wischerlippe 14 gegen Sägespäne, Schmutz und dergleichen geschützt, die am Ende der Bundbuchse 6 eingepreßt ist.

Um auszuschließen, daß die obenbeschriebene Drehung des Sägeblatts 3 während eines Sägevorgangs durchgeführt werden kann, ist der Drehgriff im nicht betätigten Zustand gegen das Verdrehen auf die nachfolgend in Verbindung mit Fig. 2 und Fig. 3 beschriebene Weise gesichert.

Hierzu ist eine weitere, zur Blechscheibe 8 baugleiche Blechscheibe 15 vorgesehen, die in das Getriebegehäuse 13 eingehängt ist. Zur einfachen Montage sind auch in diesem Falle codierte Zapfen 13A am Getriebegehäuse 13 vorgesehen. Die Blechscheibe 15 ist auf diese Weise radial fixiert. Eine axiale Fixierung der Blechscheibe 15 erfolgt durch die Montage der Bundbuchse 6. Diese wird durch eine Lagertrompete 13B des Getriebegehäuses 13 eingeführt und mit Hilfe eines Sicherungsringes 16 axial fixiert. Eine Federscheibe 17 dient dazu, Maßtoleranzen zwischen den einzelnen Schnittstellen und Vibrationen während des Sägevorganges weitestgehend zu kompensieren.

Die so fixierte Blechscheibe 15 steht nun mit ihren äußeren Indexiernuten (im nicht betätigten Zustand des Drehgriffs 11) in ständigem Eingriff mit partiell an dem Drehgriff 11 angeordneten Indexierstegen, die eine Rotationsbewegung des Drehgriffs 11 verhindern. In diesem Zustand ist anders ausgedrückt der Stößel mit der Bundbuchse 6 fest mit dem Getriebegehäuse 13 verbunden. Eine in Fig. 1 mit X bezeichnete Schnittstelle zwischen dem festen Getriebegehäuse 13 und der drehbaren Sägeblattaufnahme mit dem Schutzkäfig 9 entsteht erst, wenn eine Bedienungsperson der Säbelsäge eine Verdrehung des Sägeblatts um z.B. 180° erreichen will.

Wie insbesondere aus Fig. 3 hervorgeht, sind Zwischenstellungen, die jeweils um 45° gedreht sind, durch Anordnung der Indexiernuten auf den Blechscheiben und den Indexierstegen 11B an dem Drehgriff 11 möglich. Es versteht sich, daß die Erfindung nicht auf eine Drehmöglichkeit um Winkel von 45° beschränkt ist, sondern jede andere Drehung durch entsprechende Anordnung der Indexiernuten und/oder Indexierstegen möglich ist. Darüber hinaus ist die Erfindung auch nicht auf das oben beschriebene Ausführungsbeispiel der Rasteinrichtung beschränkt. Es können beliebige Rasteinrichtungen, die insbesondere auch eine stufenlose Verdrehung des Sägeblatts ermöglichen, vorgesehen sein.

Zur Drehung muß die Bedienungsperson den Drehgriff 11 zunächst in Richtung des Getriebegehäuses 13 ziehen, damit die oben beschriebene Verrastung zwischen dem Drehgriff 11 und dem Getriebegehäuse 13/der Blechscheibe 15 aufgehoben wird (siehe Fig. 2). Als Anschlag für die axiale Bewegung des Drehgriffs 11 dient eine Außenkante 13C des Getriebegehäuses 13. Daraufhin muß von der Bedienungsperson lediglich der Drehgriff 11 in die gewünschte Lage gedreht werden. Sobald die Bedienungsperson den Drehgriff 11 losläßt, wird dieser durch die zusammengedrückte Druckfeder 12 selbständig in seine Ausgangsposition zurückbewegt, wobei die Indexiernuten wieder zum Eingriff mit den Indexierstegen kommen.

Wie insbesondere aus Fig. 1 und Fig. 2 hervorgeht, ist der Schutzkäfig 9 zur Erzielung einer optimalen Sicherheit um die komplette Sägeblattaufnahme angeordnet. Der Schutzkäfig 9 dient gleichzeitig als Aufnahme eines Sägeschuhs 18.

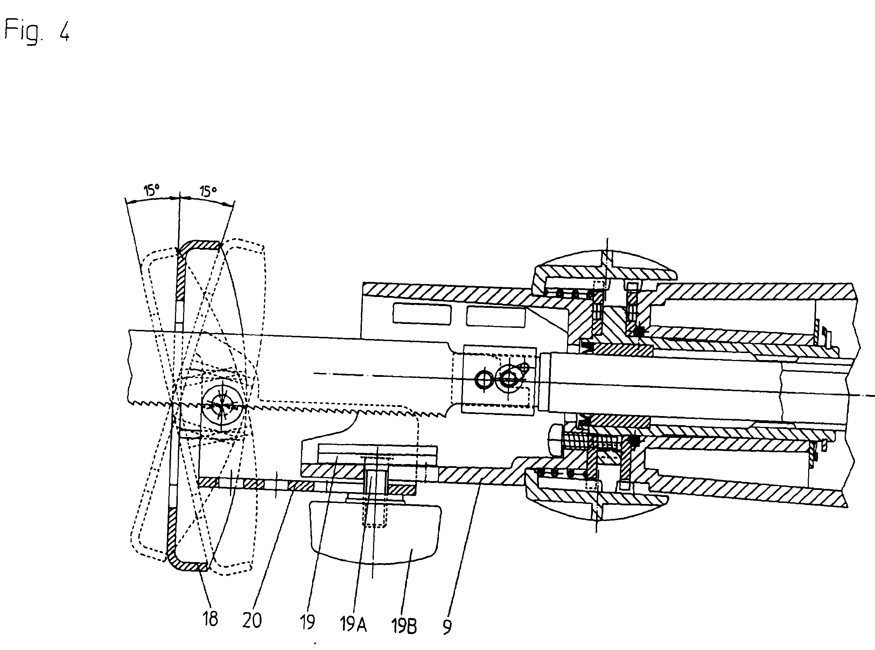

Der Sägeschuh 18, der eine sichere Auflagefläche während eines Sägevorgangs gewährleisten soll, ist gegenüber dem Schutzkäfig verschiebbar (siehe Fig. 4) und dient zur gleichmäßigen Abnutzung des eingesetzten Sägeblatts. Hierzu ist der Sägeschuh 18 an einem zum Schutzkäfig verschiebbaren U-Profil 20 angenietet. Ein abgewinkeltes Blech 19 - versehen mit einem Einpreßgewindebolzen und einem Drehknebel 19A, 19B - fixiert das U-Profil 20 zusammen mit dem Sägeschuh an dem Schutzkäfig 9.

Wie aus der Figur weiter hervorgeht, ist der Sägeschuh 18 schwenkbar an dem Schutzkäfig 9 angeordnet, beispielsweise um Winkel von 15°, um so eine gute Anpassung an das Profil eines abzusägenden Objekts zu ermöglichen.

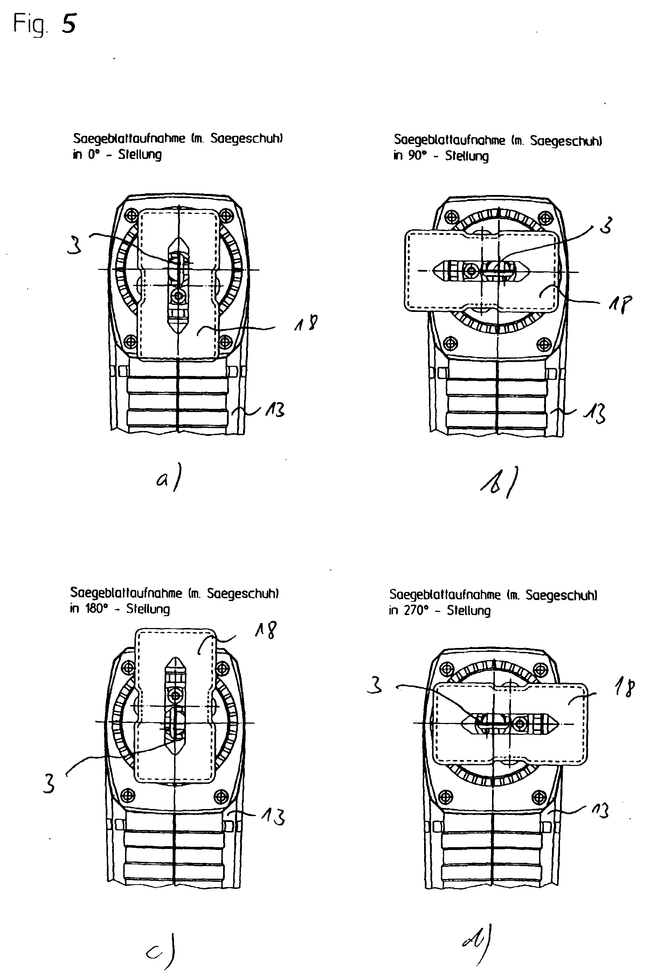

Bei einer Drehung des Sägeblatts 3 ändert sich auch die Lage des Schutzkäfigs 9 und damit auch die Drehposition des Sägeschuhs 18 relativ zum Getriebegehäuse 13 der Säbelsäge und damit zur eigentlichen Säbelsäge, so daß eine optimale Auflagefläche des Sägeschuhs 18 gegenüber dem Sägeblatt 3 in jeder Drehstellung erhalten bleibt, wie es in Fig. 5 dargestellt ist.

Die durch das Geradschub-Kurbelgetriebe (siehe Fig. 1) erzeugte Unwucht wird durch Gegengewichtsmaßnahmen, wie z.B. Ausfräsungen an einer Exzenterscheibe 2B und einem Zahnrad 21 verringert, so daß auf diese Weise ein ermüdungsfreies, ergonomisch vorteilhaftes Arbeiten mit der Säbelsäge erreicht wird.

## Patentansprüche

1. Säge, umfassend einen Motor und einen von diesem antreibbare Antriebseinrichtung, durch welche ein Sägeblatt (3) in eine oszillierende Hubbewegung versetzbar ist, dadurch gekennzeichnet, daß das Sägeblatt (3) drehbar an der Antriebseinrichtung gelagert und in einer gedrehten Position arretierbar ist.

2. Säge nach Anspruch 1, dadurch gekennzeichnet, daß ein drehbar gelagerter Sägeschuh (18) vorgesehen ist, der zusammen mit dem Sägeblatt (3) verdrehbar ist.

3. Säge nach Anspruch 1 oder 2, dadurch gekennzeichnet, daß die Antriebseinrichtung einen drehbar gelagerten Stößel (4A bis 4J) umfaßt, der das Sägeblatt (3) antreibt.

4. Säge nach Anspruch 3, dadurch gekennzeichnet, daß der Stößel (4A bis 4J) wenigstens zwei gegeneinander verdrehbar gelagerte Teile (4A, 4C) umfaßt, dessen eines Teil (4A) an einem von dem Motor antreibbaren Pleuel angeordnet ist und dessen anderes Teil (4C) eine Sägeblattaufnahme bildet, wobei zwischen den wenigstens zwei Teilen (4A, 4C) ein elastisches Ausgleichselement (4B) angeordnet ist.

5. Säge nach Anspruch 4, dadurch gekennzeichnet, dass das eine, an dem von dem Motor antreibbaren Pleuel angeordnete Teil (4A) an dem anderen, die Sägeblattaufnahme bildenden Teil (4C) mittels einer konzentrisch angeordneten Schraubverbindung (4Z) befestigt ist.

6. Säge nach Anspruch 4, dadurch gekennzeichnet, dass das eine, an dem von dem Motor antreibbaren Pleuel angeordnete Teil (4A) an dem anderen, die Sägeblattaufnahme bildenden Teil (4C) mittels eines Verbindungselements (4O) befestigt ist, das in einer zwischen dem einen Teil (4C) und dem anderen Teil (4A) angeordneten und auf die Gestalt des Verbindungselements (4O) angepassten Ausnehmung oder Nut (4P) angeordnet ist.

7. Säge nach Anspruch 6, dadurch gekennzeichnet, dass das Verbindungselement ein Draht (4O) ist, der durch eine im wesentlichen tangential zur Ausnehmung (4P) hin durchgängigen Öffnung (4Q) in der Ausnehmung (4P) positionierbar ist.

8. Säge nach einem der Ansprüche 1 bis 7, dadurch gekennzeichnet, daß im wesentlichen koaxial zur Längsachse des Sägeblatts (3) eine gegen die Rückstellkraft eines Rückstellelements (12) axial verschiebliche, in vorgebbaren Drehpositionen arretierbare Rasteinrichtung vorgesehen ist, mittels deren das Sägeblatt (3) drehbar und in einer gedrehten Position arretierbar ist.

9. Säge nach Anspruch 8, dadurch gekennzeichnet, daß die Rasteinrichtung umfaßt:
- eine Bundbuchse (6), durch die der Stößel (4A bis 4J) geführt ist;
- ein auf der Bundbuchse (6) angeordnetes erstes Rastelement;
- ein an einem Gehäuse der Säge angeordnetes zweites Rastelement;
- und ein gegen die Rückstellkraft des Rückstellelements in Richtung der Längsachse des Sägeblatts (3) axial verschiebliches Betätigungselement (12), durch welches der Stößel (4A bis 4J) zusammen mit dem mit ihm drehtest verbundenen ersten Rastelement drehbar ist und welches sowohl auf das erste als auch auf das zweite Rastelement angepaßte weitere Rastelemente aufweist und in seiner von dem Rückstellelement (12) vorgespannten Ausgangslage eine gedrehte und arretierte Position des Sägeblatts (3) definiert.

10. Säge nach Anspruch 9, dadurch gekennzeichnet, daß das erste und zweite Rastelement Indexierscheiben (11, 15) und die an dem Betätigungselement angeordneten weiteren Rastelemente Indexierstege (11A, 11B) sind.

11. Säge nach Anspruch 9, dadurch gekennzeichnet, daß das Betätigungselement ein manuell bedienbarer Drehgriff (11) ist, der gegen die Rückstellkraft einer Rückstellfeder (12) verschieblich ist.

12. Säge nach einem der voranstehenden Ansprüche, dadurch gekennzeichnet, daß das Sägeblatt (3) wenigstens teilweise von einem Schutzkäfig (9) umgeben ist, der vorzugsweise an dem ersten Rastelement (11) befestigt ist.

13. Säge nach Anspruch 12, dadurch gekennzeichnet, daß ein Sägeschuh (18) an dem Schutzkäfig (9) schwenkbar und im wesentlichen parallel zur Hubrichtung des Sägeblatts veschiebbar angeordnet ist.
